(19) Europäisches Patentamt

European Patent Office

Office européen des brevets

(11) **EP 0 865 815 B1**

(12) **EUROPEAN PATENT SPECIFICATION**

(45) Date of publication and mention
of the grant of the patent:
**19.02.2003 Bulletin 2003/08**

(51) Int Cl.[7]: **B01D 53/50**, B01D 46/24

(21) Application number: **98104937.2**

(22) Date of filing: **18.03.1998**

(54) **Method for collecting dust**

Verfahren zur Staubsammlung

Procédé pour la collection de poussières

(84) Designated Contracting States:
**DE ES FI FR GB NL SE**

(30) Priority: **18.03.1997 JP 6445097**

(43) Date of publication of application:
**23.09.1998 Bulletin 1998/39**

(73) Proprietors:
- **THE HOKKAIDO ELECTRIC POWER COMPANY INC.**
  **Sapporo-shi Hokkaido (JP)**
- **Mitsubishi Heavy Industries, Ltd.**
  **Tokyo 100-0005 (JP)**

(72) Inventors:
- **Katsuki, Yasuo**
  **Sapporo, Hokkaido (JP)**
- **Ohnishi, Takashi**
  **Yufutsu-gun, Hokkaido (JP)**
- **Kaneko, Shozo**
  **Chiyoda-ku, Tokyo (JP)**
- **Hashimoto, Akira, Mitsubishi Heavy Ind., Ltd.**
  **Nagasaki-shi, Nagasaki-ken (JP)**
- **Fujioka, Yuichi, Mitsubishi Heavy Ind., Ltd.**
  **Nagasaki-shi, Nagasaki-ken (JP)**
- **Tokunaga, Kikuo, Mitsubishi Heavy Ind., Ltd.**
  **Nagasaki-shi, Nagasaki-ken (JP)**
- **Setoguchi, Toshihiko,**
  **Mitsubishi Heavy Ind., Ltd.**
  **Nagasaki-shi, Nagasaki-ken (JP)**

(74) Representative: **Henkel, Feiler, Hänzel**
  **Möhlstrasse 37**
  **81675 München (DE)**

(56) References cited:
EP-A- 0 207 070     EP-A- 0 362 015
EP-A- 0 550 905     EP-A- 0 611 590
WO-A-97/29168

**Description**

The present invention relates to a dust collecting apparatus for dedusting a Ca-containing gas by a ceramics filter and an operation method thereof.

Description of the Prior Art:

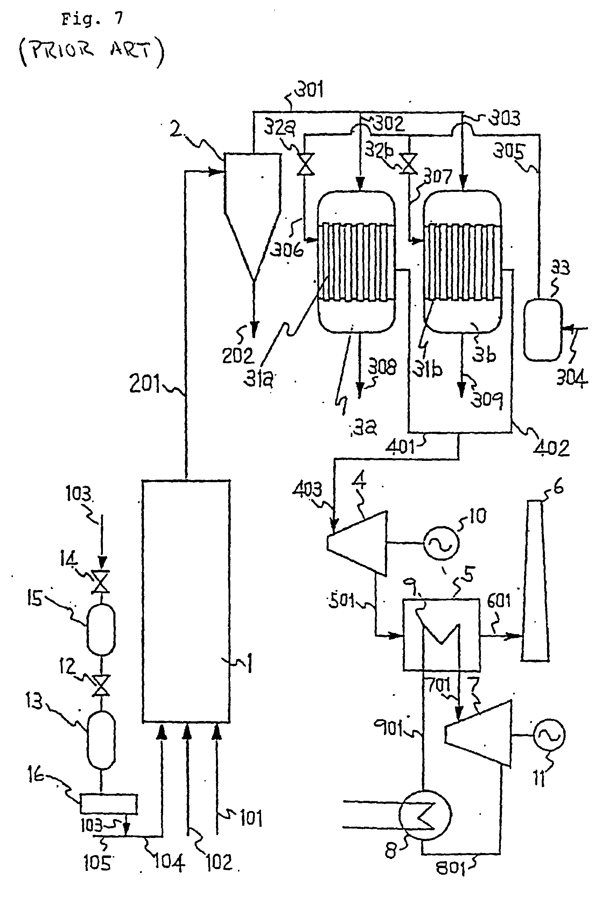

A ceramics filter is appropriate for collecting a dust contained in a high temperature gas. Especially in a pressurized fluidized-bed combustion power generation system as shown in Fig. 7, the ceramics filter provided therein is effective for reducing a wearing rate of a gas turbine blade material and reducing a dust in a combustion waste gas to be discharged into the air.

A prior art dust collecting apparatus will be described with reference to Fig. 7. In Fig. 7, coal 101, air 102 and a desulfurizing agent 103 are supplied into a pressurized fluidized-bed combustion furnace 1. The desulfurizing agent 103 is first supplied into a hopper 15 through a valve 14 which is open, then the valve 14 is closed and the hopper 15 is pressurized by a gas (not shown) so that a pressure in the hopper 15 and that in a hopper 13 become equal to each other, then a valve 12 is opened and the desulfurizing agent 103 is caused to fall into the hopper 13. The desulfurizing agent 103 is metered by a feeder 16 and is carried with a gas flow to be mixed into air 105 so that a mixture 104 of the air and the desulfurizing agent is supplied into the pressurized fluidized-bed combustion furnace 1.

The coal 101 is fluidized by the supplied air 102 to be combusted and $SO_2$ generated by the combustion reacts with, and is absorbed by, the desulfurizing agent 103.

A combustion gas 201 generated at the pressurized fluidized-bed combustion furnace 1 is dedusted by a cyclone 2. A dust 202 so dedusted is discharged out of the system. A combustion gas 301 after dedusted bifurcates to enter a filter container 3a, 3b, respectively. In the filter container 3a, 3b, there are provided a multiplicity of ceramics filters 31a, 31b, each of which is tubular and is constructed in such a gas flow structure that a cyclone outlet gas (combustion gas) 302, 303 is led thereinto and the combustion gas passes therethrough from an inside to an outside thereof.

When the combustion gas 302, 303 passes through the ceramics filter 31a, 31b, the dust contained in the combustion gas 302, 303 is collected on an inner surface of the ceramics filter 31a, 31b. The dust so collected on the ceramics filter is peeled off by a back wash gas 306, 307, which is flown periodically, to fall down in the ceramics filter 31a, 31b to a bottom portion of the filter container 3a, 3b to be recovered therefrom. In a buffer tank 33, there is stored a pressurized air 304, thus the back wash gas 306, 307 is supplied into the filter container 3a, 3b by opening and closing a valve 32a, 32b periodically.

A combustion gas 401, 402, having passed through the ceramics filter 31a, 31b, joins together outside of the filter container 3 to form a combustion gas 403, which is introduced into a gas turbine 4. The combustion gas 403 drives the gas turbine 4 to thereby generate an electric power by a generator 10. A combustion gas 501 at a gas turbine outlet is supplied into a waste heat recovery boiler 5 so that a sensible heat of the combustion gas 501 is converted into an energy of steam 701 by a heat exchanger 9. The steam 701 drives a steam turbine 7 to thereby generate an electric power by a generator 11. Steam 801 which has come out of the steam turbine is changed to become a condensate by a condenser 8 and water 901 thereof is pressurized again to be supplied to the heat exchanger 9 of the waste heat recovery boiler 5. The combustion gas 601 which has passed through the waste heat recovery boiler 5 is discharged into the air from a stack 6.

In the pressurized fluidized-bed combustion power generation system, if a load is increased, temperature of the combustion gas 301 is elevated corresponding to the load, thus temperature of the ceramics filter 31a, 31b is elevated. Generally that temperature is approximately 650°C at the load of 50%, approximately 750°C at the load of 75% and approximately 830°C at the load of 100%. When a B type limestone is used for the desulfurizing agent 103 in the prior art system shown in Fig. 7, there is caused no change with time in the differential pressure in the ceramics filter 31a, 31b at the temperature of 650°C, while in a case where the load is increased and the temperature of the ceramics filter 31a, 31b exceeds 750°C, there is caused a phenomenon in which the differential pressure in the ceramics filter 31a, 31b is elevated with time. If the temperature is set to a temperature at which the differential pressure in the ceramics filter 31a, 31b starts to be elevated, the differential pressure in the ceramics filter 31a, 31b continues to be elevated until the operation must be stopped finally.

As one of the methods for reducing the filter differential pressure, to elevate a filter back wash pressure is effective. However, to elevate the filter back wash pressure invites a breakage of a seal portion of the ceramics filter 31a, 31b or a breakage of a pressure structure portion of the filter container 3a, 3b, hence there is an upper limit value in the filter back wash pressure. Even if the back wash pressure is set to a maximum back wash pressure within a permissible range, if the B type limestone is used and the filter temperature is between 750°C and 810°C, the filter differential pressure continues to be elevated with time and there is a problem that the operation of the pressurized fluidized-bed combustion power generation system must be stopped finally.

SUMMARY OF THE INVENTION:

It is therefore a basic object of the present invention to provide a method of removing dust from a combustion gas in which a specific mineral is mixed into an inlet gas of the dust collecting apparatus to thereby suppress an elevation rate of a differential pressure in a ceramics filter and eliminate a need of operation stop of a pressurized fluidized-bed combustion power generation system and it is also an object to provide an operation method of said dust collecting apparatus in which supply amount of said mineral is regulated.

This object is attained by a method according to claim 1. Specific embodiments are described in the dependent claims.

BRIEF DESCRIPTION OF THE DRAWINGS:

Fig. 1 is a schematic diagram of a pressurized fluidized-bed combustion power generation system to which a dust collecting apparatus according to a first embodiment of the present invention is applied.

Fig. 2 shows a comparison (ratio) between sizes of shear force between particles on a mixture of CaO and MgO as results of measuring in a $CO_2$ atmosphere in the dust collecting apparatus of the present invention.

Fig. 3 is a schematic diagram and structural view of a test apparatus of the dust collecting apparatus of the present invention for verifying that a filter differential pressure lowers with addition of MgO.

Fig. 4 is a graph showing test results in which the differential pressure change in a case of addition of MgO into a limestone is expressed as a comparison (ratio) between elevation rates in dirt progress rate values.

Fig. 5 is a schematic diagram of a pressurized fluidized-bed combustion power generation system to which a dust collecting apparatus according to a second embodiment of the present invention is applied.

Fig. 6 is a schematic diagram of a pressurized fluidized-bed combustion power generation system to which a dust collecting apparatus according to a third embodiment of the present invention is applied.

Fig. 7 is a schematic diagram of a pressurized fluidized-bed combustion power generation system to which a prior art dust collecting apparatus is applied.

DESCRIPTION OF THE PREFERRED EMBODIMENTS:

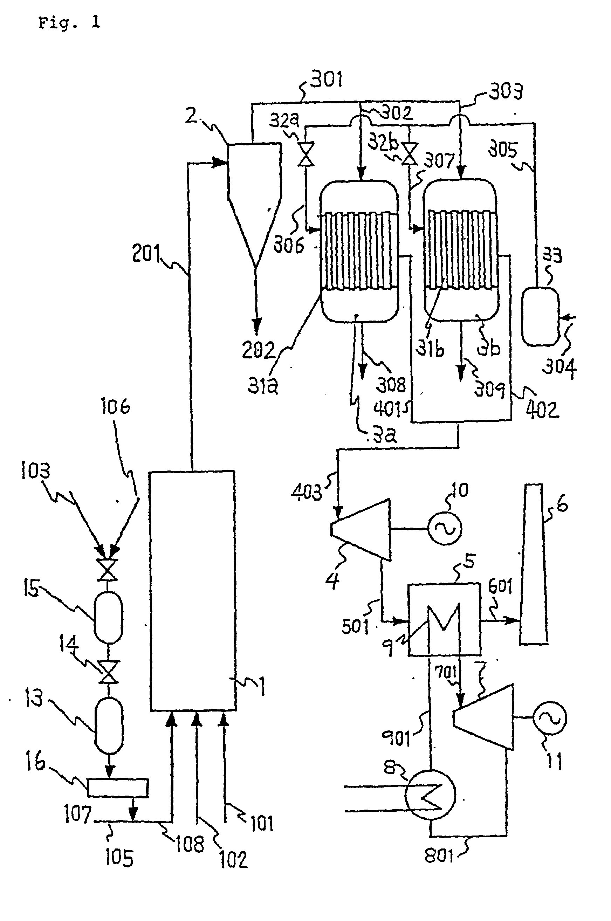

Herebelow, embodiments according to the present invention will be described with reference to the drawings. Fig. 1 is a schematic diagram of a pressurized fluidized-bed combustion power generation system to which a dust collecting apparatus according to a first embodiment of the present invention is applied. In Fig.

1, what is different from the prior art example shown in Fig. 7 is that there is provided a means for supplying a mixture 107 of a limestone 103 and an MgO- or $MgCO_3$-containing mineral 106 into a pressurized fluidized-bed combustion furnace 1. Other construction is same as that of Fig. 7 and description thereon is omitted.

If an MgO-containing rate in the mixture 107 is small, while there is expected an effect of reducing a differential pressure elevation rate, an effect as much of stopping the differential pressure elevation may not be expected. Corresponding to the differential pressure elevation rate, rate of MgO in the limestone changes and generally if the rate of MgO relative to CaO is approximately 1 to 15%, the effect can be expected.

However, if the differential pressure elevation rate is very large, it is considered preferable to increase an MgO concentration. Also, it is possible to provide a metering means for regulating a supply amount of the MgO- or $MgCO_3$-containing mineral 106 although not shown in Fig. 1.

Next, by use of a shear force between particles measuring device, shear forces between particles have been measured on the limestone and the mixture of limestone and various minerals in a $CO_2$ atmosphere by the following procedures.

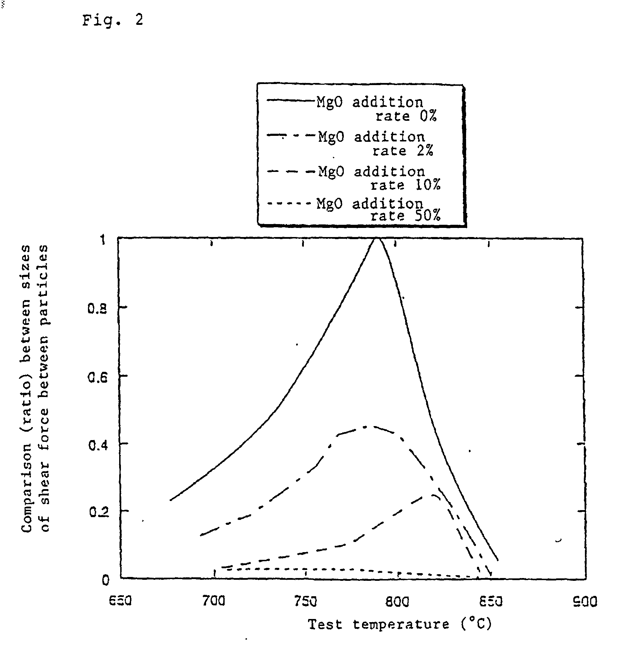

Fig. 2 shows a comparison (ratio) between sizes of the shear force between particles as results of measuring. A vertical axis of Fig. 2 is expressed on a reference of a shear force between particles at a temperature of 790°C in a case of CaO only (a case of MgO addition rate 0% in Fig. 2). In the case of CaO only, the shear force between particles has been increased at a temperature of 770°C to 880°C. This phenomenon is similar to a differential pressure elevation characteristics in an actual filter. Various minerals have been added to CaO and it has been found that the shear force between particles lowers as addition amount of MgO is increased, as shown in Fig. 2.

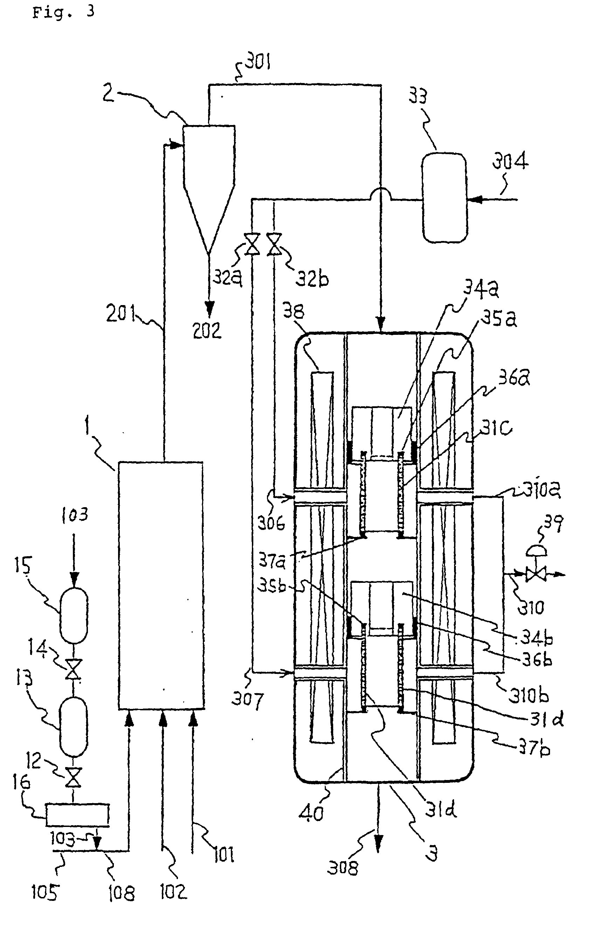

Because it has been found from the result of the shear force measuring as aforementioned that addition of MgO mitigates a sticking force of particles, in order to clarify a relationship between this phenomenon and the filter differential pressure and to verify an effect of MgO, a filter evaluation tests have been done on an apparatus of a bench test size as shown in Fig. 3.

The filter test apparatus consists of a pressurized fluidized-bed combustion furnace 1, a cyclone 2, a filter container 3 and a pressure regulating valve 39 for regulating a pressure of the system. In the filter container 3, there is contained a ceramics filter 31a, 31d. On an upper portion of the ceramics filter 31c, 31d, there is provided a weight 34a, 34b made of a metal via a packing 35a, 35b. There is also provided a seal packing 36a, 36b, 37a, 37b between the ceramics filter 31c, 31d and a filter holding tube 40.

The seal packing 36a, 36b, 37a, 37b serves to seal a combustion gas 301 so that the combustion gas 301 may not flow by-passing the ceramics filter 31c, 31d and to protect the ceramics filter 31c, 31d so that the ceramics filter 31c, 31d may not collide directly with the filter holding tube 40 by shocks caused when a back wash gas 306, 307 is introduced for back-washing the ceramics filter 31c, 31d. Because the apparatus is a small test apparatus having a large heat loss, there is provided an annular electric furnace 38 surrounding the ceramics filter 31c, 31d for keeping warmth of the ceramics filter 31c, 31d.

The filter differential pressure changes as a gas consistency and a gas flow rate change. In order to compare changes in a resistance value when gas flows in the filter at different temperatures, it is necessary to compensate changes by the gas consistency and gas flow rate. Supposing that the filter differential pressure can be expressed by the following equation, a dirt progress rate in the equation shows a flowability of gas in the filter and a size of resistance of the filter can be compared by the size of the dirt progress rate;

$$\text{(Ceramics filter differential pressure )} =$$

$$\text{(Dirt progress rate value)} \times \text{(Gas flow rate)}$$

$$\times \text{(Gas consistency)}$$

Further, influences given on the dirt progress rate value by yes or no of addition of MgO and its addition amount have been investigated and procedures thereof are shown below;

i) In the experiments, A type coal of approximately 8 kg/h and B type limestone of 0.5 kg/h are supplied so as to effect a pressurized fluidized-bed combustion and a combustion gas of approximately 80 $Nm^3$/h has been produced. If MgO is to be added, it is mixed into the B type limestone.

ii) Dedusting is done by a cyclone 2 so that a dust concentration of the combustion gas 301 at an outlet of the cyclone 2 is set to 0.2 to 0.5 g/$Nm^3$ and the combustion gas 301 is introduced into the filter container 3.

iii) Pressure in the filter container 3 is set to 10 ata and filter temperature is regulated by the annular electric furnace 38 so as to be 650°C.

iv) The filter differential pressure and gas amount of 650°C are measured with time. Although not shown in Fig. 3, an orifice is provided in a piping line 310a, 310b and measuring of the gas amount is done by measuring a resistance therein. At 650°C, the filter differential pressure has been stabilized to approximately 1000 mm $H_2O$.

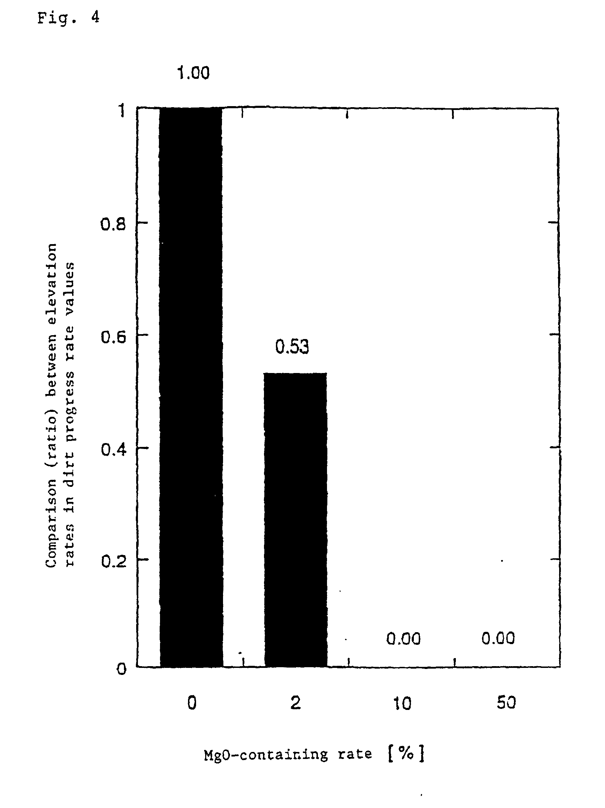

v) Then, the filter temperature is elevated to 750°C and the filter differential pressure and gas amount are measured. The filter differential pressure at 750°C is measured with time. Comparison (ratio) between elevation rates of the dirt progress rate values obtained by the above procedures on a case of the B type limestone only at approximately 750°C and cases of MgO addition of 2%, 10% and 50% (all in weight %) to the B type limestone at same temperature is shown in Fig. 4.

As described above, shear forces in the particles of CaO or mixture of CaO and other minerals in a high temperature gas atmosphere are measured resulting in finding MgO as an additive for reducing a sticking ability of particles containing CaO, and its effectiveness has been found by tests using a test apparatus in simulation of an actual apparatus.

Next, a function of reducing sticking ability of particles containing CaO by adding MgO will be described. If CaO particles or $CaCO_3$ particles are viewed molecularly, a portion of Ca molecules is charged in positive and a portion of O molecules is charged in negative. The portion so separated electrically in positive or negative easily attracts the portion separated reversely in negative or positive, respectively. In case of $SiO_2$ or $Al_2O_3$, there are caused portions therein charged in positive and negative, respectively, although differently strengthwise, hence there occurs nothing to act to mitigate an electrical attraction. However, in case of MgO, Mg atom is so small as compared with the surrounding O atom and the structure of MgO is such as if O atom only can be seen from outside. Therefore, MgO surface is charged in negative entirely, and if MgO enters between particles of which charges are distributed in negative and positive, there occur repulsions between these distributed charged particles with result that there is considered an effect to prevent sticking between CaO particles or $CaCO_3$ particles.

According to the first embodiment as described above, the mixture 107 of the limestone 103 and the MgO- or $MgCO_3$- containing mineral 106 is supplied into the pressurized fluidized-bed combustion furnace 1, its combustion gas 201 is dedusted by the cyclone 2 and the combustion gas 301 so dedusted is supplied into the filter container 3a, 3b, thus by so adding MgO, the filter differential pressure elevation rate can be suppressed as shown in Fig. 4 and further it has been found that the more MgO is supplied, the more the effect becomes remarkable.

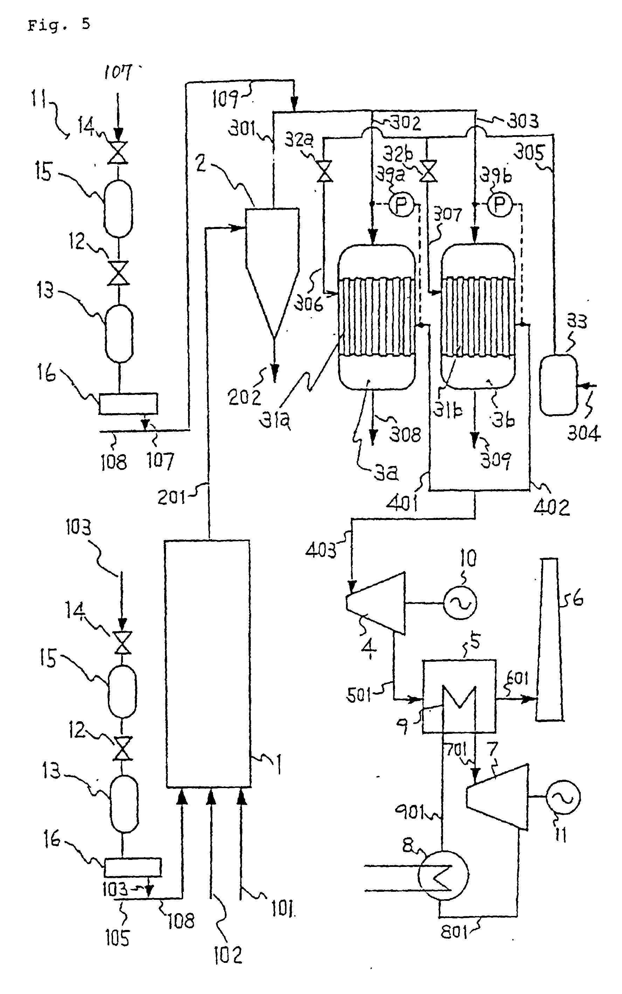

Fig. 5 is a schematic diagram of a pressurized fluidized-bed combustion power generation system to which a dust collecting apparatus according to a second embodiment of the present invention is applied. In Fig. 5, what is different from the prior art example shown in Fig. 7 is that there are provided at an outlet of a cyclone 2 a hopper unit as an MgO adding device which consists of a hopper 15, 13, a valve 14, 12 and a feeder 16, and a metering device 11. Also, there is provided a differential pressure gauge 39a, 39b for measuring a differential pressure in a ceramics filter 31a, 31b. Other construction is same as that of the prior art example shown in Fig. 7.

In the second embodiment, MgO concentration can be regulated arbitrarily by the metering device 11. While the differential pressure in the ceramics filter 31a, 31b is being measured by the differential pressure gauge 39a, 39b, such MgO amount as stabilizes the differential pressure in the ceramics filter from time to time is added. It is to be noted that in order to mix a dust in the gas and an MgO-containing mineral well, MgO may be supplied at a position of an inlet of the cyclone 2.

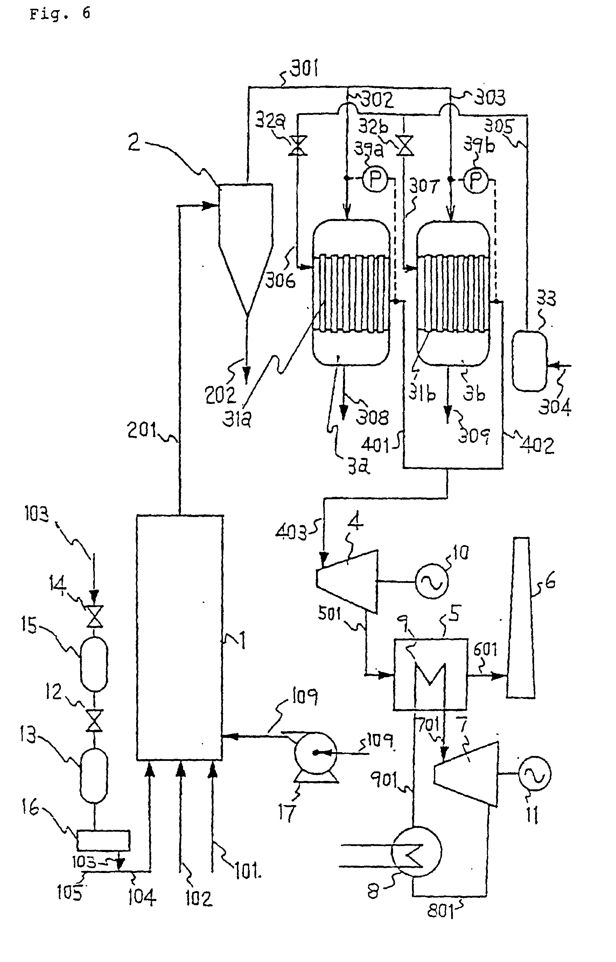

Fig. 6 is a schematic diagram of a pressurized fluidized-bed combustion power generation system to which a dust collecting apparatus according to a third embodiment of the present invention is applied. In Fig. 6, what is different from the prior art example shown in Fig. 7 is that there are provided a metering pump 17 for supplying a water slurry of $Mg(OH)_2$ into a pressurized fluidized-bed combustion furnace 1 and a differential pressure gauge 39a, 39b for measuring a differential pressure in a ceramics filter 31a, 31b. Other construction is same as that of the prior art example shown in Fig. 7.

In the third embodiment, an $Mg(OH)_2$ water slurry 109 is supplied into the pressurized fluidized-bed combustion furnace 1 by the metering pump 17. $Mg(OH)_2$ in the $Mg(OH)_2$ water slurry decomposes in the pressurized fluidized-bed combustion furnace 1 to generate MgO and $H_2O$, thus fine particles of MgO are supplied into the ceramics filter 31a, 31b. Also, while the differential pressure in the ceramics filter 31a, 31b is being measured by the differential pressure gauge 39a, 39b, like in the second embodiment, such MgO amount as stabilizes the differential pressure in the ceramics filter from time to time is added.

According to the second and third embodiments as described above, like in the first embodiment, the filter differential pressure elevation can be suppressed by addition of MgO and the more MgO is added, the more the effect becomes increased.

## Claims

1. A method of removing dust from a combustion gas (201) comprising:

supplying said combustion gas (201) comprising limestone or CaO to a dust collecting apparatus including a ceramics filter (31a, 31b);

supplying at least one mineral of MgO, $MgCO_3$, and $Mg(OH)_2$ or a substance (106, 107, 109) containing said mineral into an inlet gas of said dust collecting apparatus; and

regulating said supplying of said at least one mineral or substance corresponding to a front and back differential pressure in ceramics filter (31a, 31b) or an inlet gas flow rate of said combustion gas (201).

2. The method of claim 1, wherein said regulating of said supplying of said mineral or said substance (109) containing said mineral is in relation to said differential pressure across said ceramics filter.

3. The method of claim 2, wherein said regulating of said supplying of said mineral or said substance (109) containing said mineral comprises increasing an amount of said mineral or said substance (109) containing said mineral as said differential pressure across said ceramics filter increases.

4. The method of claim 1, wherein said regulating of said supplying of said mineral or said substance (109) containing said mineral is in relation to said inlet flow rate of said combustion gas (201).

5. The method of claim 1, wherein said dust collecting apparatus further includes a cyclone (2) having an inlet and an outlet, said cyclone being provided upstream of said ceramics filter (31a, 31b), said supplying of said mineral or said substance (109) containing said mineral comprises supplying said mineral or said substance (109) containing said mineral at one of said inlet and said outlet of said cyclone.

6. The method of claim 1, wherein said desulfurizing agent comprises limestone.

7. The method of claim 1, wherein said supplying comprises supplying into a pressurized fluidized-bed combustion furnace provided upstream of said dust collecting apparatus.

8. The method of claim 7, wherein said supplying of said mineral or said substance (109) containing said mineral comprises supplying a water slurry into said combustion furnace (1).

## Patentansprüche

1. Verfahren zur Entfernung von Staub aus einem Verbrennungsgas (201), umfassend:

Zuführen des Verbrennungsgases (201), das Kalkstein oder CaO enthält, zu einer Staubsammelvorrichtung, die ein Keramikfilter (31a, 31b) umfasst;

Zuführen von mindestens einem Mineral von MgO, $MgCO_3$ und $Mg(OH)_2$ oder einer Substanz (106, 107, 109), die das Mineral enthält, in ein Einlassgas der Staubsammelvorrichtung; und

Regeln der Zufuhr von dem mindestens einen Mineral oder der mindestens einen Substanz entsprechend der Vorderund Rückseitendruckdifferenz des Keramikfilters (31a, 31b) oder der Einlassgasströmungsrate des Verbrennungsgases (201).

2. Verfahren nach Anspruch 1, wobei das Regeln der Zufuhr des Minerals oder der das Mineral enthaltenden Substanz (109) in Bezug auf die Druckdifferenz über das Keramikfilter erfolgt.

3. Verfahren nach Anspruch 2, wobei das Regeln der Zufuhr des Minerals oder der das Mineral enthaltenden Substanz (109) das Erhöhen der Menge des Minerals oder der das Mineral enthaltenden Substanz (109) bei einer Zunahme der Druckdifferenz über das Keramikfilter umfasst.

4. Verfahren nach Anspruch 1, wobei das Regeln der Zufuhr des Minerals oder der das Mineral enthaltenden Substanz (109) in Bezug zur Einlassströmungsrate des Verbrennungsgases (201) erfolgt.

5. Verfahren nach Anspruch 1, wobei die Staubsammelvorrichtung ferner einen Zyklon (2) mit einem Einlass und einem Auslass umfasst, wobei der Zyklon stromaufwärts des Keramikfilters (31a, 31b) angebracht ist, wobei die Zufuhr des Minerals oder der das Mineral enthaltenden Substanz (109) die Zufuhr des Minerals oder der das Mineral enthaltenden Substanz (109) am Einlass und/oder Auslass des Zyklons umfasst.

6. Verfahren nach Anspruch 1, wobei das Entschwefelungsmittel Kalkstein umfasst.

7. Verfahren nach Anspruch 1, wobei das Zuführen die Zufuhr in einen stromaufwärts der Staubsammelvorrichtung angebrachten Druckwirbelschicht-Verbrennungsofen umfasst.

8. Verfahren nach Anspruch 7, wobei das Zuführen des Minerals oder der das Mineral enthaltenden Substanz (109) das Zuführen einer Wasseraufschlämmung in den Verbrennungsofen (1) umfasst.

**Revendications**

1. Procédé d'enlèvement de poussières d'un gaz de combustion (201), comportant :

l'alimentation dudit gaz de combustion (201) comportant de la pierre à chaux ou du CaO vers un appareil de recueil de poussières incluant un filtre de céramique (31a, 31b),
l'alimentation d'au moins un minéral pris parmi

$MgO$, $MgCO_3$ et $Mg(OH)_2$ ou une substance (106, 107, 109) contenant ledit minéral dans un gaz d'entrée dudit appareil de recueil de poussières, et
la régulation de ladite alimentation dudit au moins un minéral ou de ladite au moins une substance, correspondant à une pression différentielle avant et arrière dans le filtre de céramique (31a, 31b) ou à un débit de gaz d'entrée dudit gaz de combustion (201).

2. Procédé selon la revendication 1, dans lequel ladite régulation de ladite alimentation dudit minéral ou de ladite substance (109) contenant ledit minéral est en relation avec ladite pression différentielle à travers ledit filtre de céramique.

3. Procédé selon la revendication 2, dans lequel ladite régulation de ladite alimentation dudit minéral ou de ladite substance (109) contenant ledit minéral comprend l'augmentation de la quantité dudit minéral ou de ladite substance (109) contenant ledit minéral lorsque ladite pression différentielle à travers ledit filtre de céramique augmente.

4. Procédé selon la revendication 1, dans lequel ladite régulation de ladite alimentation dudit minéral ou de ladite substance (109) contenant ledit minéral est en relation avec ledit débit d'entrée dudit gaz de combustion (201).

5. Procédé selon la revendication 1, dans lequel ledit appareil de recueil de poussières comporte de plus un cyclone (2) ayant une entrée et une sortie, ledit cyclone étant agencé en amont dudit filtre de céramique (31a, 31b), ladite alimentation dudit minéral ou de ladite substance (109) contenant ledit minéral comprenant l'alimentation dudit minéral ou de ladite substance (109) contenant ledit minéral au niveau d'une parmi ladite entrée et ladite sortie dudit cyclone.

6. Procédé selon la revendication 1, dans lequel ledit agent de désulfuration comprend de la pierre à chaux.

7. Procédé selon la revendication 1, dans lequel ladite alimentation comprend l'alimentation dans un four à combustion à lit fluidisé sous pression, agencé en amont dudit appareil de recueil de poussières.

8. Procédé selon la revendication 7, dans lequel ladite alimentation dudit minéral ou de ladite substance (109) contenant ledit minéral comprend l'alimentation d'une boue aqueuse dans ledit four de combustion (1).

Fig. 1

Fig. 2

Fig. 3

Fig. 4

MgO-containing rate [%]

**Fig. 5**

Fig. 6

Fig. 7
(PRIOR ART)